(19) Europäisches Patentamt
European Patent Office
Office européen des brevets

(11) **EP 2 898 383 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(21) Anmeldenummer: **13750712.5**

(22) Anmeldetag: **21.08.2013**

(51) Int Cl.:
*G05D 1/02* (2006.01)   *B62D 1/28* (2006.01)
*B62D 15/02* (2006.01)   *B60W 50/035* (2012.01)
*B60K 28/10* (2006.01)

(86) Internationale Anmeldenummer:
**PCT/EP2013/067366**

(87) Internationale Veröffentlichungsnummer:
**WO 2014/044480 (27.03.2014 Gazette 2014/13)**

(54) **VERFAHREN UND VORRICHTUNG ZUM BETREIBEN EINES KRAFTFAHRZEUGS IN EINEM AUTOMATISIERTEN FAHRBETRIEB BEI SYSTEMAUSFALL**

OPERATING METHOD AND APPARATUS OF AUTONOMOUSLY MOVING VEHICLE AT SYSTEM FAILURE

MÉTHODE ET DISPOSITIF DE RÉGULATION DU MOUVEMENT D'UN VÉHICULE AUTONOME DANS LE CAS DE DÉFAILLANCE DU SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2012 DE 102012217002**

(43) Veröffentlichungstag der Anmeldung:
**29.07.2015 Patentblatt 2015/31**

(73) Patentinhaber: **Robert Bosch GmbH**
**70442 Stuttgart (DE)**

(72) Erfinder: **HAULER, Florian**
**76137 Karlsruhe (DE)**

(56) Entgegenhaltungen:
**US-A- 5 906 645       US-A1- 2008 303 696**
**US-A1- 2012 083 959**

EP 2 898 383 B1

**Beschreibung**

Die Erfindung betrifft ein Verfahren zum Betreiben eines Kraftfahrzeugs in einem automatisierten Fahrbetrieb. Die Erfindung betrifft ferner eine Vorrichtung zum Betreiben eines Kraftfahrzeugs in einem automatisierten Fahrbetrieb.

Aus der US 2012/083959 A1 ist ein System und ein Verfahren zum Steuern eines Fahrzeugs bekannt, wobei gemäß einem Aspekt, dieses System bzw. Verfahren die Stärke des Verschleißes einer Fahrzeugkomponente bestimmt und basierend auf der Stärke des Verschleißes und Informationen abgeleitet von einer Umgebung um das Fahrzeug, das Fahrzeug derart steuert, dass ein weiterer Verschleiß der Komponente verhindert wird.

Weitere Verfahren bzw. Systeme gemäß dem Stand der Technik sind aus der US 5 906 645 A sowie der US 2008/303696 A1 bekannt.

Stand der Technik

Im Stand der Technik sind Fahrerassistenz-Systeme bekannt, die sich neuerdings nicht mehr nur auf separate Längs- und Querführungen beschränken. Zusätzliche Funktionen, wie zum Beispiel eine Stauassistenz bis hin zu einem hoch automatisierten/autonomen Fahrbetrieb vereinheitlichen eine Längs- und Querregelung zu einer Trajektorienregelung des Kraftfahrzeugs.

Zu einer Realisierung des hochautomatisierten/autonomen Fahrens muss stets mit Ausfällen und Degradierungen von Steuergeräten, Sensorik und Aktuatorik gerechnet werden. Konventionelle Maßnahmen zur Verhinderung von Systemvollausfällen sind beispielsweise redundante Berechnungen, redundante Datenübertragungen, (teil-)redundante Sensorik und (teil-)redundante Aktuatorik. Die genannten Maßnahmen sind allesamt dazu vorgesehen, um sichere Abschaltungen zu erreichen und stellen sogenannte "Fail-Safe"-Methoden dar, die das Fahrzeug in einen sicheren Zustand bringen sollen. In einem autonomen Fahrbetrieb ist der Fahrer für eine gewisse Zeit völlig aus einer Einwirkschleife auf das Kraftfahrzeug herausgenommen, so dass er nicht zu einem sicheren Überführen des Kraftfahrzeugs in einen sicheren Zustand beitragen kann.

Aus der DE 10 2009 020 649 A1 ist ein Verfahren und eine Vorrichtung zur Kollisionsvermeidung für ein Fahrzeug durch Ausweichen vor einem Hindernis bekannt. Dabei werden im Falle einer drohenden Kollision mehrere mögliche Ausweichtrajektorien ermittelt und den Ausweichtrajektorien Zeitabstandsgrenzen zugeordnet, die den Zeitabstand zum Hindernis repräsentieren, bei dem zur Kollisionsvermeidung ein Ausweichmanöver gemäß der jeweiligen Trajektorie spätestens eingeleitet werden muss.

Offenbarung der Erfindung

Aufgabe der vorliegenden Erfindung ist es, ein verbessertes Verfahren zum Betreiben eines Kraftfahrzeugs in einem automatisierten Fahrbetrieb bereitzustellen.

Die Aufgabe wird gemäß einem ersten Aspekt gelöst mit einem Verfahren zum Betreiben eines Kraftfahrzeugs in einem automatisierten Fahrbetrieb, aufweisend die Schritte:

- Ermitteln einer Standardtrajektorie, wobei die ermittelte Standardtrajektorie während des Fahrbetriebs mittels einer Regelungseinrichtung an eine Aktoreinrichtung des Kraftfahrzeugs übermittelt wird;
- Führen des Kraftfahrzeugs entlang der Standardtrajektorie; und
- Ermitteln eines Sicherheitsbereichs für das Kraftfahrzeug, wobei der ermittelte Sicherheitsbereich während des Fahrbetriebs mittels der Regelungseinrichtung an die Aktoreinrichtung übermittelt wird; wobei in einem Fall, in welchem der automatisierte Fahrbetrieb für das Kraftfahrzeug nicht mehr sichergestellt ist, auf den Sicherheitsbereich umgeschaltet wird, wodurch das Kraftfahrzeug mittels der Aktoreinrichtung in den Sicherheitsbereich geführt wird.

Gemäß einem zweiten Aspekt wird die Aufgabe gelöst mit einer Vorrichtung zum Betreiben eines Kraftfahrzeugs in einem automatisierten Fahrbetrieb, aufweisend:

- eine Sensoreinrichtung;
- eine Aktoreinrichtung;
- eine Ermittlungseinrichtung;
- eine Regelungseinrichtung; und
- eine Fehlerüberwachungseinrichtung;

wobei mittels der Ermittlungseinrichtung eine Standardtrajektorie und ein Sicherheitsbereich ermittelbar sind, wobei der Sicherheitsbereich mittels der Regelungseinrichtung an die Aktoreinrichtung des Kraftfahrzeugs übermittelbar ist, wobei in einem Fall, dass in einem Fall, dass mittels der Sensoreinrichtung und der Fehlerüberwachungseinrichtung festgestellt wird, dass der automatisierte Fahrbetrieb nicht mehr gewährleistet ist, die Aktoreinrichtung des Kraftfahrzeugs auf den Sicherheitsbereich umgeschaltet wird, wodurch das Kraftfahrzeug mittels der Aktoreinrichtung in den Sicherheitsbereich führbar ist.

Vorzugsweise kann anstatt des Kraftfahrzeugs auch allgemein ein Fahrzeug vorgesehen sein.

Bevorzugte Ausführungsformen der Erfindung sind Gegenstand von Unteransprüchen.

Eine bevorzugte Ausführungsform des erfindungsgemäßen Verfahrens sieht vor, dass der Sicherheitsbereich und die Standardtrajektorie im Wesentlichen gleichzeitig ermittelt werden. Vorteilhaft können dadurch stets hochaktuelle Daten an die Aktoreinrichtung übermittelt werden, so dass das Kraftfahrzeug im Fehlerfall in einen ungefährdeten Sicherheitsbereich geführt werden kann.

Eine bevorzugte Ausführung des Verfahrens sieht vor, dass mittels einer Fehlerüberwachungseinrichtung ein Szenario für einen Fehlerfall des Kraftfahrzeugs ermittelt wird, wobei das Kraftfahrzeug beim Eintreten des Fehlerfalls in den Sicherheitsbereich geführt wird. Dies bietet den Vorteil, dass im Fehlerfall Fahrspurdaten für das Kraftfahrzeug bereits an die Aktuatorik übermittelt worden sind, so dass das Fahrzeug nunmehr entsprechend den vorab übermittelten Daten sicher geführt werden kann.

Eine weitere bevorzugte Ausführungsform des Verfahrens sieht vor, dass je nach Fehlerfall mittels einer Regelungseinrichtung oder der Fehlerüberwachungseinrichtung auf den Sicherheitsbereich umgeschaltet wird. Vorteilhaft kann dadurch die Aktuatorik zweifach angesteuert bzw. aktiviert werden, was eine Behandlung von unterschiedlichen Fehlerfällen unterstützt. Im Falle, dass zum Beispiel eine Regelungseinrichtung zur Umsetzung von Trajektoriendaten in Aktuatordaten ausfällt, kann die Aktuatorik immer noch alternativ mittels der Fehlerüberwachungseinrichtung angesteuert werden.

Eine bevorzugte Ausführungsform des erfindungsgemäßen Verfahrens sieht vor, dass alternativ oder zusätzlich zum Sicherheitsbereich eine Sicherheitstrajektorie ermittelt wird, wobei die Sicherheitstrajektorie an die Aktoreinrichtung übermittelt wird. Dies bietet den Vorteil, dass auf diese Weise eine spezifischere Ausgestaltung eines Sicherheitsbereichs bereitgestellt wird, so dass dadurch im Fehlerfall das Kraftfahrzeug gegebenenfalls noch genauer in den sicheren Bereich und innerhalb des sicheren Bereichs geführt werden kann.

Eine bevorzugte Ausführungsform des erfindungsgemäßen Verfahrens sieht vor, dass für den Fall, dass das Kraftfahrzeug mittels der Aktoreinrichtung nur eingeschränkt steuerbar ist, das Kraftfahrzeug entlang der Sicherheitstrajektorie oder in den Sicherheitsbereich geführt wird. Dies bietet eine sinnvolle Möglichkeit für den Fall, dass eine Einrichtung zur Ermittlung der Fahrspurdaten im Wesentlichen vollständig intakt ist, so dass nunmehr das Fahrzeug mittels einer Trajektorien-Führung noch präziser in den sicheren Bereich geführt werden kann.

Eine vorteilhafte Weiterbildung des Verfahrens sieht vor, dass während des automatisierten Fahrbetriebs mehrere Sicherheitstrajektorien und mehrere Sicherheitsbereiche generiert werden, wobei nach einer Analyse des Fehlerfalles durch die Fehlerüberwachungseinrichtung eine der Sicherheitstrajektorien oder einer der Sicherheitsbereiche ausgewählt wird. Dadurch kann vorteilhaft die dem jeweiligen Fehlerbild am besten entsprechende Trajektorie oder der am besten entsprechende Sicherheitsbereich ausgewählt werden, um das Fahrzeug sicher zu führen.

Eine bevorzugte Ausführungsform des erfindungsgemäßen Verfahrens sieht vor, dass das Kraftfahrzeug im Falle eines Fehlers in einer Sensoreinrichtung für eine Umfelderkennung in den Sicherheitsbereich geführt wird. In diesem spezifischen Fehlerfall ohne sinnvolle Orientierungs- bzw. Lokalisierungsmöglichkeiten ist das Kraftfahrzeug in besonderem Maße auf ein Führen in eine sichere Zone angewiesen.

Eine bevorzugte Ausführungsform der erfindungsgemäßen Vorrichtung sieht vor, dass die Ermittlungseinrichtung ein Planungsmodul für die Standardtrajektorie aufweist, wobei mittels des Planungsmoduls auch eine Sicherheitstrajektorie ermittelbar ist, wobei auch die Sicherheitstrajektorie an die Aktoreinrichtung übermittelbar ist. Dadurch wird mittels des Planungsmoduls vorteilhafterweise eine Sicherheitstrajektorie als eine spezifischere Ausgestaltung des Sicherheitsbereichs bereitgestellt.

Eine vorteilhafte Weiterbildung der erfindungsgemäßen Vorrichtung zeichnet sich dadurch aus, dass mittels des Planungsmoduls die Standardtrajektorie, der Sicherheitsbereich und die Sicherheitstrajektorie im Wesentlichen gleichzeitig ermittelbar sind. Dadurch können stets hochaktuelle Fahrdaten für den Normalbetrieb und für den Fehlerfall ermittelt werden, die aneinander konsistent angepasst sind. Auf diese Weise stehen im Fehlerfall mit hoher Wahrscheinlichkeit ein ungefährdeter Sicherheitsbereich bzw. eine ungefährdete Sicherheitstrajektorie zur Verfügung.

Eine bevorzugte Ausführungsform der erfindungsgemäßen Vorrichtung sieht vor, dass die Umschaltung von der Standardtrajektorie auf den Sicherheitsbereich von einer Regelungseinrichtung oder von einer Fehlerüberwachungseinrichtung durchführbar ist. Dies schafft vorteilhaft zwei verschiedene Möglichkeiten zum Umschalten im Fehlerfall, so dass eine Redundanz für das Umschalten auf die sicheren Daten bereitgestellt wird.

Durch das erfindungsgemäße Verfahren kann vorteilhaft eine Sicherheitsstufe für das Kraftfahrzeug im automatisierten Fahrbetrieb dahingehend erhöht werden, dass während des automatisierten Fahrbetriebs ein Sicherheitsbereich bzw. sicher zu befahrender Bereich ermittelt und an die Aktuatorik übermittelt wird. Im Fehlerfall, in welchem der automatisierte Betrieb nicht mehr sicher gewährleistet ist, wird auf den Sicherheitsbereich umgeschaltet, wodurch das Fahrzeug dann mittels der Aktuatorik in den sicheren Bereich geführt wird.

Die Erfindung wird im Folgenden mit weiteren Merkmalen und Vorteilen anhand von mehreren Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen.

In den Figuren zeigt:

Fig. 1 eine prinzipielle Darstellung eines erfindungsgemäßen automatisierten Fahrbetriebs eines Kraftfahrzeugs in einem regulären Modus und in einem Fehlerfall;

Fig. 2 eine prinzipielle Systemdarstellung einer Aus-führungsform des erfindungsgemäßen Verfah-rens; und

Fig. 3 ein prinzipielles Blockschaltbild einer Ausfüh-rungsform der erfindungsgemäßen Vorrich-tung.

Ausführungsformen der Erfindung

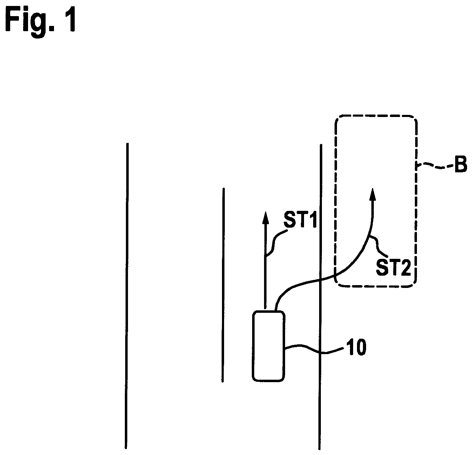

Fig. 1 zeigt in einer prinzipiellen Darstellung ein Kraftfahrzeug 10, welches sich in einem automatisierten bzw. autonomen Fahrbetrieb befindet. Dieser Fahrbetrieb ist dadurch gekennzeichnet, dass ein Fahrer von jeglichen Steuerungseingriffen auf das Kraftfahrzeug entbunden ist, sodass das Kraftfahrzeug 10 für eine definierte Zeitdauer vollautomatisch entlang einer Standardtrajektorie ST1 geführt wird.

Eine Trajektorie stellt eine Aneinanderreihung von Raum-Zeit-Punkten, also ein zeitabhängige Raumkurve dar. In mathematischer Form lässt sich eine Trajektorie folgendermaßen beschreiben:

$$T{:}r = \begin{pmatrix} x1 \\ y1 \\ \varepsilon1 \\ t1 \end{pmatrix}, ...,$$

wobei x1, y1 einen Punkt im zweidimensionalen Raum definiert, $\varepsilon1$ eine Steigung der Trajektorie in diesem Punkt zur Glättung der Trajektorie, sowie t1 einen Zeitpunkt einer Gültigkeit des Punktes darstellt. Weiterhin kann noch für jeden Punkt eine Geschwindigkeit angegeben werden. Entsprechendes gilt für dreidimensionale Trajektorien. Für zeitlich äquidistante Punktfolgen kann auf eine explizite Übermittlung des Zeitpunkts verzichtet werden.

In einem Fehlerfall, in dem der ordnungsgemäße automatisierte Fahrbetrieb des Kraftfahrzeugs 10 nicht mehr gewährleistet ist, wird das Kraftfahrzeug erfindungsgemäß in einen Sicherheitsbereich B geführt. Alternativ kann das Kraftfahrzeug 10 auch entlang einer Sicherheitstrajektorie ST2 geführt werden. Es ist mittels der Erfindung also günstiger Weise möglich, ein Kraftfahrzeug 10 bei schwerwiegenden Systemfehlern in einen frei befahrbaren Bereich (Sicherheitsbereich), beispielsweise auf einen Standstreifen einer Fahrbahn zu leiten und danach das Kraftfahrzeug 10 anzuhalten.

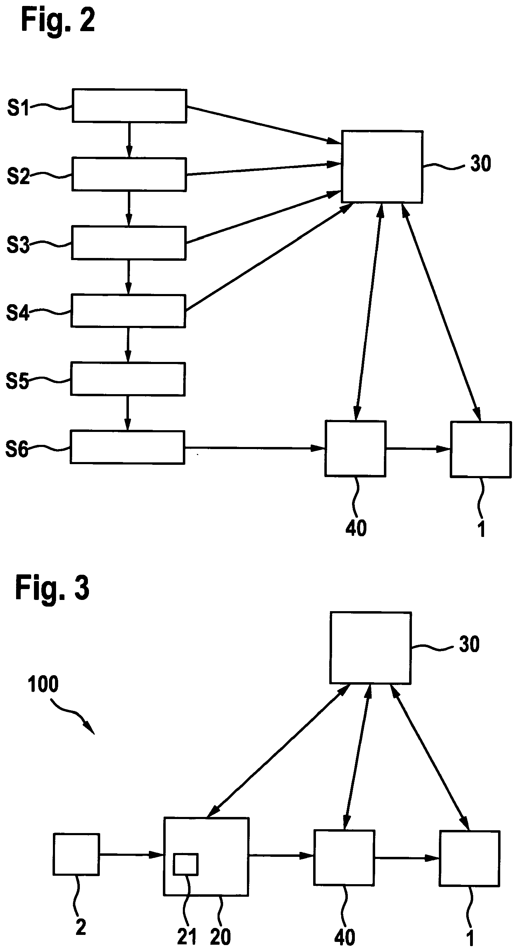

Fig. 2 zeigt auf prinzipielle Weise eine systemische Übersicht des erfindungsgemäßen Verfahrens, welches bei einer Erkennung eines Systemausfalls im automatisierten Fahrbetrieb des Kraftfahrzeugs 10 eine Generierung eines Sicherheitsbereichs B und ein Übermitteln desselben an eine Aktuatorik des Kraftfahrzeugs 10 darstellt.

In einem Schritt S1 werden im Fahrbetrieb mittels verschiedenartiger Sensoren (nicht dargestellt) Umfeldparameter des Kraftfahrzeugs 10 im Wesentlichen permanent (z.B. zyklisch in kurzen Zeitabständen) erfasst, die in einem weiteren Schritt S2 für eine Umfelderkennung und eine Lokalisierung des Kraftfahrzeugs 10 verwendet werden.

In einem Schritt S3 wird danach eine Situationsanalyse mit einem Feststellen der momentanen Gegebenheiten des Umfelds des Kraftfahrzeugs 10 durchgeführt.

In einem Schritt S4 erfolgt aufgrund der vorangegangenen Situationsanalyse eine vorausschauende Prädiktion des Umfelds des Kraftfahrzeugs 10. Ein zukünftiges, auf hoher Wahrscheinlichkeit basierendes Bewegungsverhalten des Kraftfahrzeugs 10 wird auf diese Art und Weise erzeugt.

Eine Verhaltensgenerierung in einem Schritt S5 ermöglicht ein Planen von Aktionen, die notwendig sind, um die vorangegangene prädizierte Situation umzusetzen. Beispielsweise kann dies eine Planung eines durch-zuführenden Spurwechsels oder einer durchzuführen-den Geschwindigkeitsänderung des Kraftfahrzeugs 10 beinhalten.

Erfindungsgemäßen ist nunmehr vorgesehen, dass im automatisierten Fahrbetrieb des Kraftfahrzeugs 10 in einem Schritt S6 sogenannte Standardtrajektorien ST1 generiert und an eine Regelungseinrichtung 40 übermittelt werden, wobei mittels der Regelungseinrichtung 40 die mathematischen Daten der Trajektorien ST1 in für eine Aktoreinrichtung 1 prozessierbare Daten umsetzt werden. Die Regelungseinrichtung 40 übermittelt die genannten Daten an die Aktoreinrichtung 1 des Kraftfahrzeugs 10, die mehrere Aktoren (z.B. Lenksteller) umfassen kann.

Im Wesentlichen gleichzeitig oder auch zeitlich sehr kurz nacheinander wird im Schritt S6 ein Sicherheitsbereich B bzw. eine Sicherheitstrajektorie ST2 erzeugt, insbesondere zyklisch ezeugt, die ebenfalls an die Regelungseinrichtung 40 bzw. von dieser an die Aktoreinrichtung 1 übermittelt wird. Für die Berechnung des Sicherheitsbereichs B bzw. der Sicherheitstrajektorie ST2 muss die detektierte Bewegung anderer Verkehrsteilnehmer prädiziert werden unter Berücksichtigung physikalisch möglicher und wahrscheinlicher Bewe-gungsänderungen. Die Regelungseinrichtung 40 trans-feriert damit also nicht nur zum aktuellen Zeitpunkt gültige Fahrspurdaten, sondern auch zukünftige Daten der Sicherheitstrajektorie ST2 und sicher befahrbare Bereiche, welche in einem Fehlerfall angefahren werden. Zur Übertragung der genannten Daten vorgesehene Bussysteme können beispielsweise CAN- oder FlexRay- oder Ethernet basiert sein.

Eine Fehlerüberwachungseinrichtung 30 ist vorgesehen, um die Vorgänge der oben beschriebenen Schritte S1 bis S4 zu überwachen. Dies kann zum Beispiel bedeuten, dass Statusbotschaften der Sensoreinrichtung 2 überwacht, oder über verschiedene Sensoren (z.B. Video-, Radar-, Ultraschallsensor, usw.) der Sensoreinrichtung 2 hinweg Plausibilisierungen durchgeführt werden. Im Ergebnis bedeutet dies, dass mittels der Fehlerüberwachungseinrichtung 30 eine auf Wahrscheinlichkeitswerten beruhende probabilistische Fehlerüberwachung des Systems durchgeführt wird, wobei in einem Fall, dass ein Fehler erkannt wird, eine Anweisung an die Regelungseinrichtung 40 übermittelt wird, mittels der Aktoreinrichtung 1 den Sicherheitsbereich B bzw. die Sicherheitrajektorie ST2 abzufahren.

Die Fehlerüberwachungseinrichtung 30 stellt somit also gewissermaßen eine Kontrollinstanz dar, welche festlegt, ob das Kraftfahrzeug 10 entsprechend der Standardtrajektorie ST1 geführt werden soll oder ob Umstände vorliegen, die ein Geführtwerden des Kraftfahrzeugs in den Sicherheitsbereich B bzw. entlang der Sicherheits- bzw. Ersatztrajektorie ST2 sinnvoll erscheinen lassen.

Das erfindungsgemäße Verfahren bietet zahlreiche Vorteile:

So ist es aufgrund der Tatsache, dass bereits im Vorfeld ein Sicherheitsbereich B bzw. eine Sicherheitrajektorie ST2 ermittelt und an die Aktuatorik 1 übertragen werden, insbesondere im Wesentlichen permanent an die Aktuatorik 1 übertragen werden, möglich, im Fehlerfall im Wesentlichen unverzüglich auf die Sicherheitrajektorie ST2 umzuschalten und dadurch das Kraftfahrzeug 10 in einen sicheren Bereich zu manövrieren.

Eine nützliche Anwendung des erfindungsgemäßen Verfahrens liegt beispielsweise dann vor, wenn eine Sensorik defekt ist und sich nicht mehr plausibilisieren lässt. Mittels der Fehlerüberwachungseinrichtung 30 wird dies erkannt, woraufhin diese der Regelungseinrichtung 40 mitteilt, dass der Sicherheitsbereich B bzw. die Sicherheitrajektorie ST2, gebildet aus funktionsfähigen Sensorikdaten, abzufahren ist.

Nützlich ist das erfindungsgemäße Verfahren auch dann, wenn es aufgrund eines Fehlerfalls nicht mehr möglich ist, die Aktuatorik-Sollwerte von der Regelungseinrichtung 40 an die Aktoreinrichtung 1 zu übertragen. Die Aktoreinrichtung 1 hat zu diesem Zeitpunkt aufgrund eines engen Übermittlungs-Zeitrasters (vorzugsweise weniger als ca. alle 40 ms) bereits aus dem vorigen Zyklus übermittelte gültige Aktuatorik-Sollwerte zur Sicherheitrajektorie bzw. Sicherheitsbereich zur Verfügung, auf die mittels der Fehlerüberwachungseinrichtung 30 umgeschaltet werden kann.

Nützlich ist die Erfindung insbesondere auch für jegliche Fehlerfälle, in denen eine Umfelderkennung des Kraftfahrzeugs 10 im Verkehrsfluss aufgrund von Sensordefekten oder eine Lokalisierung des Fahrzeugs auf der Straße nicht eindeutig möglich ist. Dies kann beispielsweise der Fall sein, wenn Umfelderkennungssysteme oder Lokalisierungssysteme (z.B. Radar, Ultraschallsensor, Videokamera, GPS, usw.) defekt sind. Aufgrund der den Fehler erkennenden Fehlerüberwachungseinrichtung 30 wird auch in diesem Fall eine Aktivierung der zur Aktoreinrichtung 1 vorher übermittelten sicheren Aktuatoriksollwerten durchgeführt. Für den Fall, dass ein Stellpotenzial von redundanter Aktuatorik der Aktoreinrichtung 1 nicht ausreicht (z.B. wenn ein Lenkungseingriff mittels Bremsen vorgenommen werden muss, weil die Ansteuerung des regulären Lenkstellers, bzw. der Lenksteller selbst defekt ist), wird vorzugsweise der Sicherheitsbereich B angesteuert, weil es in diesem Fall nicht möglich ist, den infinitesimal ausgebildeten Verlauf der Sicherheitrajektorie ST2 abzufahren.

Denkbar wäre in diesem Fall alternativ aber auch, die eingeschränkte Manövrierfähigkeit des Kraftfahrzeugs 10 in die Verhaltensgenerierung von Schritt S5 bzw. die Planung der Trajektorien von Schritt S6 zu spiegeln, um gültige Sicherheitrajektorien ST2 zu erhalten, nach denen das Kraftfahrzeug 10 dann trotz eingeschränkter Manövrierfähigkeit geführt wird. Dies bedeutet letztlich nichts anderes, als dass die Sicherheitrajektorie ST2 nach wie vor einwandfrei ermittelt werden kann, so dass nunmehr auch mit eingeschränkter Funktionsfähigkeit der Aktoreinrichtung 1 eine Sicherheitrajektorie ST2 gefahren wird. Als ein Beispiel wäre hier eine Durchführung von Lenkbewegungen mittels Bremseingriffen auf Räder des Kraftfahrzeugs 10, die von einem ESP-System (elektronisches Stabilitätsprogramm) gesteuert werden, zu nennen.

In einem weiteren Fehlerfall, in welchem die gesamte Wirkkette der vorgehend beschriebenen Schritte S1 bis S6 defekt ist, wird von der Fehlerüberwachungseinrichtung 30 eine Kontrollfunktion übernommen und die in der Aktoreinrichtung 1 gespeicherte - weil bereits im Vorfeld übertragene - Sicherheitrajektorie ST2 aktiviert.

Vorteilhaft wird durch die Übermittlung des Sicherheitsbereichs B bzw. der Sicherheitrajektorie ST2 eine Information übermittelt, die eine geplante Positionierung des Fahrzeugs in der Zukunft betrifft. Dadurch werden Lösungen für Fehlerszenarien bereits in die Zukunft abgebildet, indem für derartige Szenarien Positionierungen des Kraftfahrzeugs hinterlegt sind.

Fig. 3 zeigt in einem prinzipiellen Blockschaltbild eine Übersichtsdarstellung einer Ausführungsform der erfindungsgemäßen Vorrichtung 100, wobei Teile der genannten Vorrichtung 100 bereits anhand der Systemdarstellung von Fig. 2 beschrieben worden sind. Es ist erkennbar, dass innerhalb der Ermittlungseinrichtung 20 ein Planungsmodul 21 vorgesehen ist, welches für die Planung und Ermittlung des Sicherheitsbereichs B bzw. der Trajektorien ST1, ST2 zuständig ist.

Vorzugsweise sind alle dargestellten Komponenten in jeweils eigenen Steuergeräten angeordnet.

Denkbar ist jedoch jede beliebige Anordnung bzw. Aufteilung der gezeigten Komponenten auf Steuergeräte. Die zwischen der Fehlererkennungseinrichtung 30 und der Ermittlungseinrichtung 20, Regelungseinrichtung 40 und Aktoreinrichtung 1 gezeigten Doppelpfeile sollen eine bidirektionale Kommunikation zwischen den genannten Komponenten andeuten.

Zusammenfassend wird mit der vorliegenden Erfindung eine nützliche Möglichkeit bereitgestellt, um ein Kraftfahrzeug in einem hochautomatisierten/autonomen Fahrbetrieb bei Auftreten von systemrelevanten Defekten in einen sicheren Zustand überzuführen. Dies erfolgt dadurch, dass bereits im Vorfeld Fehlerszenarien in Form von Sicherheitsbereichen, Sicherheitstrajektorien oder AktuatorikSollwerten ermittelt und an eine Aktoreinrichtung übermittelt werden. Bei einem tatsächlichen Eintreten des vorausberechneten Fehlerszenarios müssen die bereits übertragenen oben genannten Daten zum nur noch aktiviert werden, so dass das Fahrzeug sicher in einen beherrschbaren oder in einen sicheren Zustand (Anhalten, gegebenenfalls auf der Standspur) versetzt wird.

Vorteilhaft wird mittels der Erfindung ein etwaiges Systemversagen schnellstmöglich erkannt, wobei der Fahrer informiert wird und möglichst schnell in die Steuerungsverantwortung für das Fahrzeug zurückgeholt werden kann. Ein Zeitraum zwischen der Fehlererkennung und der Fahrerübernahme kann von der erfindungsgemäßen Vorrichtung überbrückt werden.

Ein Fachmann wird erkennen, dass nach dem erfindungsgemäßen Prinzip vielfältige Fehler von Sensorik des Kraftfahrzeugs bzw. kritische Verkehrssituationen beherrschbar sind.

**Patentansprüche**

1.  Verfahren zum Betreiben eines Kraftfahrzeugs (10) in einem automatisierten Fahrbetrieb, aufweisend die Schritte:

    - Ermitteln einer Standardtrajektorie (ST1), wobei die ermittelte Standardtrajektorie (ST1) während des Fahrbetriebs mittels einer Regelungseinrichtung (40) an eine Aktoreinrichtung (1) des Kraftfahrzeugs (10) übermittelt wird;
    - Führen des Kraftfahrzeugs (10) entlang der Standardtrajektorie (ST1); und
    - Ermitteln eines Sicherheitsbereichs (B) für das Kraftfahrzeug (10), wobei der ermittelte Sicherheitsbereich (B) während des Fahrbetriebs mittels der Regelungseinrichtung (40) an die Aktoreinrichtung (1) übermittelt wird; wobei in einem Fall, in welchem der automatisierte Fahrbetrieb für das Kraftfahrzeug (10) nicht mehr sichergestellt ist, auf den Sicherheitsbereich (B) umgeschaltet wird, wodurch das Kraftfahrzeug (10) mittels der Aktoreinrichtung (1) in den Sicherheitsbereich (B) geführt wird, wobei der Sicherheitsbereich (B) und die Standardtrajektorie (ST1) im Wesentlichen gleichzeitig ermittelt werden.

2.  Verfahren nach Anspruch 1, wobei mittels einer Fehlerüberwachungseinrichtung (30) ein Szenario für einen Fehlerfall des Kraftfahrzeugs (10) ermittelt wird, wobei beim Eintreten des Fehlerfalls der Sicherheitsbereich (B) angesteuert wird.

3.  Verfahren nach Anspruch 2, wobei je nach Fehlerfall mittels einer Regelungseinrichtung (40) oder der Fehlerüberwachungseinrichtung (30) auf den Sicherheitsbereich (B) umgeschaltet wird.

4.  Verfahren nach einem der Ansprüche 1 bis 3, wobei alternativ oder zusätzlich zum Sicherheitsbereich (B) eine Sicherheitstrajektorie (ST2) ermittelt wird, wobei die Sicherheitstrajektorie (ST2) an die Aktoreinrichtung (1) übermittelt wird.

5.  Verfahren nach Anspruch 4, wobei für den Fall, dass das Kraftfahrzeug (10) mittels der Aktoreinrichtung (1) nur eingeschränkt steuerbar ist, das Kraftfahrzeug (10) entlang der Sicherheitstrajektorie (ST2) oder in den Sicherheitsbereich (B) geführt wird.

6.  Verfahren nach einem der Ansprüche 4 oder 5, wobei während des automatisierten Fahrbetriebs mehrere Sicherheitstrajektorien (ST2) und mehrere Sicherheitsbereiche (B) generiert werden, wobei nach einer Analyse des Fehlerfalls durch die Fehlerüberwachungseinrichtung (30) eine der Sicherheitstrajektorien (ST2) oder einer der Sicherheitsbereiche (B) ausgewählt wird.

7.  Verfahren nach einem der vorhergehenden Ansprüche, wobei das Kraftfahrzeug (10) im Falle eines Fehlers in einer Sensoreinrichtung (2) für eine Umfelderkennung in den Sicherheitsbereich (B) geführt wird.

8.  Verfahren nach einem der Ansprüche 4 bis 7, wobei das Kraftfahrzeug (10) im Falle eines Fehlers in einer Sensoreinrichtung (2) für eine Umfelderkennung entlang der Sicherheitstrajektorie (ST2) geführt wird.

9.  Vorrichtung (100) zum Betreiben eines Kraftfahrzeugs (10) in einem automatisierten Fahrbetrieb, aufweisend:

    - eine Sensoreinrichtung (2);
    - eine Aktoreinrichtung (1);
    - eine Ermittlungseinrichtung (20);
    - eine Regelungseinrichtung (40); und
    - eine Fehlerüberwachungseinrichtung (30);
    - wobei mittels der Ermittlungseinrichtung (20) eine Standardtrajektorie (ST1) und ein Sicherheitsbereich (B) ermittelbar ist, wobei der Sicherheitsbereich (B) mittels der Regelungseinrichtung (40) an die Aktoreinrichtung (1) des Kraftfahrzeugs (10) übermittelbar ist, wobei in einem Fall, dass mittels der Sensoreinrichtung (2) und der Fehlerüberwachungseinrichtung (30) festgestellt wird, dass der automatisierte Fahrbetrieb nicht mehr gewährleistet ist, die Aktoreinrichtung (1) des Kraftfahrzeugs (10) auf den Sicherheitsbereich (B) umschaltbar ist, wodurch das Kraftfahrzeug (10) mittels der Aktoreinrichtung (1) in den Sicherheitsbereich (B) führbar ist, wobei mittels des Planungsmoduls (21) die Standardtrajektorie (ST1), der Sicherheitsbereich (B) und die Sicherheitstrajektorie (ST2) im Wesentlichen gleichzeitig ermittelbar sind.

10. Vorrichtung nach Anspruch 9, wobei die Ermittlungseinrichtung (20) ein Planungsmodul (21) für die Standardtrajektorie (ST1) aufweist, wobei mittels des Planungsmoduls (21) auch eine Sicherheitstrajektorie (ST2) ermittelbar ist, wobei auch die Sicherheitstrajektorie (ST2) mittels der Regelungseinrichtung (40) an die Aktoreinrichtung (1) übermittelbar ist.

11. Vorrichtung nach Anspruch 9 oder 10, wobei die Umschaltung von der Standardtrajektorie (ST1) auf den Sicherheitsbereich (B) von der Regelungseinrichtung (40) oder von der Fehlerüberwachungseinrichtung (30) durchführbar ist.

12. Computerprogrammprodukt mit Programmcodemitteln zur Durchführung des Verfahrens nach einem der Ansprüche 1 bis 8, wenn es auf einer elektronischen Steuerungseinrichtung (20,30;40) abläuft oder auf einem computerlesbaren Datenträger gespeichert ist.

**Claims**

1. Method for operating a motor vehicle (10) in an automated driving mode, comprising the steps:

    - determining a standard trajectory (ST1), wherein the determined standard trajectory (ST1) is transferred during the driving mode to an actuator device (1) of the motor vehicle (10) by means of a closed-loop control device (40) ;
    - guiding the motor vehicle (10) along the standard trajectory (ST1); and
    - determining a safety area (B) for the motor vehicle (10), wherein the determined safety area (B) is transferred to the actuator device (1) by means of the closed-loop control device (40) during the driving mode, wherein in the event of the automated driving mode for the motor vehicle (10) no longer being ensured, switching over to the safety area (B) takes place, as the result of which the motor vehicle (10) is guided into the safety area (B) by means of the actuator device (1), wherein the safety area (B) and the standard trajectory (ST1) are determined essentially simultaneously.

2. Method according to Claim 1, wherein a scenario for a fault situation of the motor vehicle (10) is determined by means of a fault-monitoring device (30), wherein the safety area (B) is aimed for when the fault situation occurs.

3. Method according to Claim 2, wherein depending on the fault situation switching over to the safety area (B) is carried out by means of a closed-loop control device (40) or the fault-monitoring device (30).

4. Method according to one of Claims 1 to 3, wherein as an alternative to, or in addition to, the safety area (B) a safety trajectory (ST2) is determined, wherein the safety trajectory (ST2) is transferred to the actuator device (1).

5. Method according to Claim 4, wherein in the event of the motor vehicle (10) being controllable by means of the actuator device (1) only to a limited degree, the motor vehicle (10) is guided along the safety trajectory (ST2) or into the safety area (B).

6. Method according to one of Claims 4 and 5, wherein during the automated driving mode a plurality of safety trajectories (ST2) and a plurality of safety areas (B) are generated, wherein after an analysis of the fault situation by the fault-monitoring device (30) one of the safety trajectories (ST2) or one of the safety areas (B) is selected.

7. Method according to one of the preceding claims, wherein in the event of a fault in a sensor device (2) for detecting the surroundings the motor vehicle (10) is guided into the safety area (B).

8. Method according to one of Claims 4 to 7, wherein in the event of a fault in a sensor device (2) for detecting the surroundings the motor vehicle (10) is guided along the safety trajectory (ST2).

9. Device (100) for operating a motor vehicle (10) in an automated driving mode, comprising:

    - a sensor device (2);
    - an actuator device (1);
    - a determining device (20);
    - a closed-loop control device (40); and
    - a fault-monitoring device (30);

- wherein a standard trajectory (ST1) and a safety area (B) can be determined by means of the determining device (20), wherein the safety area (B) can be transferred to the actuator device (1) of the motor vehicle (10) by means of the closed-loop control device (40) wherein in the event of it being detected by means of the sensor device (2) and the fault-monitoring device (30) that the automated driving mode is no longer ensured, the actuator device (1) of the motor vehicle (10) can be switched over to the safety area (B), as a result of which the motor vehicle (10) can be guided into the safety area (B) by means of the actuator device (1), wherein by means of the planning module (21) the standard trajectory (ST1), the safety area (B) and the safety trajectory (ST2) can be determined essentially simultaneously.

**10.** Device according to Claim 9, wherein the determining device (20) has a planning module (21) for the standard trajectory (ST1), wherein a safety trajectory (ST2) can also be defined by means of the planning module (21), wherein the safety trajectory (ST2) can also be transferred to the actuator device (1) by means of the closed-loop control device (40).

**11.** Device according to Claim 9 or 10, wherein the switching over from the standard trajectory (ST1) to the safety area (B) can be carried out by the closed-loop control device (40) or by the fault-monitoring device (30).

**12.** Computer program product having program code means for carrying out the method according to one of Claims 1 to 8 if said computer program product runs on an electronic control device (20, 30, 40) or is stored on a computer-readable data carrier.

**Revendications**

**1.** Procédé de mise en fonctionnement d'un véhicule automobile (10) dans un mode de conduite automatique, comprenant les étapes suivantes :

- déterminer une trajectoire standard (ST1), dans lequel la trajectoire standard (ST1) déterminée est transmise au moyen d'un dispositif de régulation (40) à un dispositif actionneur (1) du véhicule automobile (10) pendant la conduite ;
- guider le véhicule automobile (10) le long de la trajectoire standard (ST1) ; et
- déterminer une plage de sécurité (B) pour le véhicule automobile (10), dans lequel la plage de sécurité (B) déterminée est transmise au moyen du dispositif de régulation (40) au dispositif actionneur (1) pendant la conduite ; dans lequel, dans le cas où la conduite automatique du véhicule automobile (10) n'est plus assurée, passer à la plage de sécurité (B), le véhicule automobile (10) étant ainsi guidé au moyen du dispositif actionneur (1) dans la plage de sécurité (B), dans lequel la plage de sécurité (B) et la trajectoire standard (ST1) sont déterminées de manière sensiblement simultanée.

**2.** Procédé selon la revendication 1, dans lequel un scénario correspondant à un défaut du véhicule automobile (10) est déterminé au moyen d'un dispositif de surveillance des défauts (30), dans lequel la plage de sécurité (B) est commandée lors de la survenue du cas de défaut.

**3.** Procédé selon la revendication 2, dans lequel un basculement sur la plage de sécurité (B) est effectué selon le cas de défaut au moyen d'un dispositif de régulation (40) ou du dispositif de surveillance des défauts (30).

**4.** Procédé selon l'une quelconque des revendications 1 à 3, dans lequel une trajectoire de sécurité (ST2) est déterminée en variante ou en plus de la plage de sécurité (B), dans lequel la trajectoire de sécurité (ST2) est transmise au dispositif actionneur (1).

**5.** Procédé selon la revendication 4, dans lequel, dans le cas où le véhicule automobile (10) ne peut être commandé que de manière restreinte au moyen du dispositif actionneur (1), le véhicule automobile (10) est guidé le long de la trajectoire de sécurité (ST2) ou dans la plage de sécurité (B).

**6.** Procédé selon l'une quelconque des revendications 4 ou 5, dans lequel plusieurs trajectoires de sécurité (ST2) et plusieurs plages de sécurité (B) sont générées pendant la conduite automatique, dans lequel l'une des trajectoires de sécurité (ST2) ou l'une des plages de sécurité (B) est sélectionnée après une analyse du défaut par le dispositif de surveillance des défauts (30).

**7.** Procédé selon l'une quelconque des revendications précédentes, dans lequel le véhicule automobile (10) est guidé dans la plage de sécurité (B) dans le cas d'un défaut dans un dispositif capteur (2) destiné à une détection de l'environnement.

**8.** Procédé selon l'une quelconque des revendications 4 à 7, dans lequel le véhicule automobile (10) est guidé le long de la trajectoire de sécurité (ST2) dans le cas d'un défaut dans un dispositif capteur (2) destiné à une détection de l'environnement.

**9.** Dispositif (100) destiné à mettre en fonctionnement un véhicule automobile (10) dans un mode de conduite automatique, comprenant :

- un dispositif capteur (2) ;
- un dispositif actionneur (1) ;
- un dispositif de détermination (20) ;
- un dispositif de régulation (40) ; et
- un dispositif de surveillance des défauts (30) ;
- dans lequel une trajectoire standard (ST1) et une plage de sécurité (B) peuvent être obtenues au moyen du dispositif de détermination (20), dans lequel la plage de sécurité (B) peut être transmise au moyen du dispositif de régulation (40) au dispositif actionneur (1) du véhicule automobile (10), dans lequel, dans un cas où il est établi au moyen du dispositif capteur (2) et du dispositif de surveillance des défauts (30) que la conduite automatique ne peut plus être garantie, le dispositif actionneur (1) du véhicule automobile (10) peut être amené à basculer sur la plage de sécurité (B), le véhicule automobile (10) pouvant alors être guidé au moyen du dispositif actionneur (1) dans la plage de sécurité (B), dans lequel la trajectoire standard (ST1), la plage de sécurité (B) et la trajectoire de sécurité (ST2) peuvent être obtenues de manière sensiblement simultanée au moyen du dispositif de planification (21).

10. Dispositif selon la revendication 9, dans lequel le dispositif de détermination (20) comporte un module de planification (21) destiné à la trajectoire standard (ST1), dans lequel une trajectoire de sécurité (ST2) peut également être obtenue au moyen du module de planification (21), dans lequel la trajectoire de sécurité (ST2) peut également être transmise au dispositif actionneur (1) au moyen du circuit de régulation (40).

11. Dispositif selon la revendication 9 ou 10, dans lequel le basculement de la trajectoire standard (ST1) vers la plage de sécurité (B) peut être effectué par le dispositif de régulation (40) ou par le dispositif de surveillance des défauts (30).

12. Produit de programme d'ordinateur comportant des moyens à codes de programmes destinés à mettre en oeuvre le procédé selon l'une quelconque des revendications 1 à 8 lorsqu'il s'exécute sur un dispositif de commande électronique (20, 30, 40) ou lorsqu'il est stocké sur un support de données lisible par ordinateur.

# Fig. 1

# Fig. 2

S1

S2

S3

S4

S5

S6

30

40

1

# Fig. 3

100

30

2

21  20

40

1

**EP 2 898 383 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012083959 A1
- US 5906645 A
- US 2008303696 A1
- DE 102009020649 A1